Europäisches Patentamt

European Patent Office

Office européen des brevets

(19)

(11) Numéro de publication: **0 238 897 B1**

(12) **FASCICULE DE BREVET EUROPEEN**

(45) Date de publication du fascicule du brevet:
16.05.90

(51) Int. Cl.⁵: **G01C 9/28**

(21) Numéro de dépôt: **87102984.9**

(22) Date de dépôt: **03.03.87**

(54) **Niveau à bulle.**

(30) Priorité: **06.03.86 FR 8603183**

(43) Date de publication de la demande:
**30.09.87 Bulletin 87/40**

(45) Mention de la délivrance du brevet:
**16.05.90 Bulletin 90/20**

(84) Etats contractants désignés:
**AT BE DE ES GB IT LU NL SE**

(56) Documents cités:
**EP-A- 0 070 476**
**DE-A- 2 254 456**
**FR-A- 2 323 125**

(73) Titulaire: **STANLEY-MABO, Zone Industrielle Trépillot,
F-25009 Besancon(FR)**

(72) Inventeur: **Prouteau, Bernard, Cidex 2 Boîte 3,
F-25320 Montferrand(FR)**

(74) Mandataire: **Jörchel, Dietrich R.A. et al, c/o BUGNION
S.A. Case postale 375, CH-1211 Genève 12 -
Champel(CH)**

ACTORUM AG

## Description

La présente invention se rapporte à un niveau à bulle comprenant un corps constitué d'un profilé creux, au moins un bloc à bulle logé dans un boîtier qui est monté dans ledit corps, ce boîtier étant muni de canaux reliés à au moins une ouverture d'introduction de la colle. L'invention se rapporte également au procédé de fabrication d'un tel niveau.

Pour obtenir un niveau à bulle de bonne qualité, il est nécessaire qu'il soit réglé en usine d'une manière irréprochable et surtout qu'il soit inderéglable au cours du temps. C'est pourquoi, de plus en plus, on abandonne la fixation du bloc à bulle par vis au profit d'une fixation par collage. De nombreuses réalisations ont déjà été proposées sans apporter une solution optimale :

Selon le brevet FR 2 247 704, par exemple, le corps de niveau est constitué par un profilé creux à l'intérieur duquel est monté un bloc à bulle disposé dans un boîtier qui est d'abord ajusté et fixé à la paroi supérieure du profilé par des vis. Des canaux prévus dans ce boîtier ainsi qu'entre celui-ci et le bloc à bulle, et la paroi supérieure du profilé permettent la répartition de la colle jusqu'aux points de collage, la colle étant introduite au moyen d'un piston dans un orifice d'introduction situé à l'intérieur du corps de niveau. Pour cela, à la fois le bloc à bulle et le boîtier et le boîtier et le corps de niveau sont fixés avec la colle. Le montage de ce niveau, qui est décrit seulement pour une bulle horizontale, n'est cependant pas très simple. En effet, le bloc à bulle doit être introduit dans le corps de niveau depuis l'extrémité de celui-ci, puis tiré dans le logement à l'aide de vis qui servent à la fois à la fixation et à l'ajustage du bloc à bulle. Le collage qui permet la fixation définitive du bloc à bulle n'intervient qu'après la pré-fixation et l'ajustage de celui-ci.

Selon un autre brevet FR 2 205 662, le boîtier du bloc à bulle a une cavité interne en forme de tronc de cône dont les bases portent des bossages, cette cavité est fermée par un couvercle bombé formé par un ressort qui se comprime élastiquement dans le corps du profilé creux. La cavité interne du boîtier du bloc à bulle est prévue pour recevoir le bloc à bulle sans jeu et ledit boîtier est lui-même fixé sans jeu dans le profilé creux grâce à ses bossages qui s'emboîtent dans des fenêtres appropriées dudit profilé. Après ajustage, le blocage du boîtier est complété grâce à de la pâte durcie introduite dans un petit volume prévu entre le boîtier et le corps de niveau. Ce type de boîtier est relativement compliqué.

Selon le brevet EP 70 476, le boîtier du bloc à bulle est en une partie d'une forme assez complexe et est muni de canaux répartis de telle sorte que la colle sert à la fixation simultanée du bloc à bulle dans son boîtier et du boîtier dans le corps de niveau. Le montage et la fixation des différentes pièces sont relativement compliqués et nécessitent des pièces annexes servant aussi de piston pour la répartition de la colle.

Enfin, selon le brevet DE 3 215 667, il est connu, pour un corps profilé en I, d'avoir un boîtier composé de deux moitiés à profilés conjugués et à crochets élastiques, mais qui sont conçues de manière à serrer, au moyen de languettes, les deux côtés de l'âme du profilé. L'assemblage des trois éléments, bloc à bulle, boîtier et corps de niveau se fait simultanément et leur fixation est aussi réalisée par de la colle introduite dans des évidements avant le montage des deux moitiés du boîtier; dans ces évidements s'engagent les crochets de l'autre moitié qui délogent la colle vers les faces de contact. Dans ce cas, de nouveau, il y a collage simultané des deux moitiés du boîtier entre elles et du boîtier sur le profilé. Par ailleurs, ce dispositif ne convient pas aux corps de niveaux en profilé creux puisque le principe de fixer les deux moitiés du boîtier sur l'âme du profilé n'est pas applicable.

La présente invention a pour but d'obtenir un niveau de haute qualité, du type décrit ci-dessus, dans lequel le boîtier est constitué de pièces simples, rapidement assemblées, qui se monte facilement dans le corps de niveau et permet un ajustage de la bulle également facile et rapide.

A cet effet, le niveau à bulle selon l'invention est caractérisé par le fait que le boîtier est composé de deux moitiés assemblées par profils conjugués et fixées l'une à l'autre en renfermant ledit bloc à bulle; chaque moitié du boîtier comporte une languette élastique, les deux languettes des deux moitiés étant opposées l'une à l'autre parallèlement entre elles et aux deux faces internes opposées du corps du profilé creux contre lesquelles elles s'appliquent par leur élasticité; lesdits canaux sont des rainures prévues sur la face latérale extérieure de chaque moitié se trouvant en contact avec lesdites faces internes du profilé creux, au moins une partie de ces rainures se trouvant sur lesdites languettes, la colle fixant ainsi les faces latérales du boîtier aux faces internes opposées du corps; l'ouverture d'introduction de la colle est formée par un trou prévu dans une paroi du profilé creux en contact avec l'une des faces latérales extérieures d'une moitié du boîtier.

Par rapport aux niveaux connus de ce type, le niveau selon l'invention présente les avantages suivants : il comporte peu de pièces constitutives et celles-ci sont facilement assemblées entre elles. Le boîtier constitué de deux moitiés fixées entre elles et sur le bloc à bulle, préférablement par ultrason, forme une unité prémontée qui est seulement insérée après dans le corps de niveau et maintenue dans celui-ci grâce aux languettes élastiques. L'introduction de la colle est faite facilement et rapidement, après l'assemblage, dans les rainures des languettes et des parois internes du corps, depuis l'extérieur, à travers un trou de celui-ci, sans nécessiter d'outils ou de pistons spéciaux. Donc la fixation du boîtier dans le corps est réalisée sans autres éléments de fixation. De préférence, les deux moitiés sont absolument identiques, ce qui permet de diminuer le prix de revient d'un tel niveau.

Dans une forme de réalisation avantageuse de l'invention, appliquée à un niveau à bulle horizontale, le boîtier contenant le bloc à bulle est prévu pour être inséré directement depuis l'extérieur dans un évidement en forme de U, formé dans deux parois latérales opposées du profilé, les deux moitiés du boîtier comportant une fenêtre en forme de U, entourée d'un rebord qui affleure les faces extérieures des parois du profilé et limite la pénétration du boîtier dans ledit profilé, le bord inférieur dudit rebord et/ou le bord supérieur de l'évidement, étant convexe pour le réglage de la bulle avant la fixation définitive du boîtier.

Dans une autre forme de réalisation avantageuse de l'invention, appliquée à un niveau à bulle verticale, le boîtier contenant le bloc à bulle est prévu pour être inséré dans une extrémité du profilé creux, derrière au moins une fenêtre d'une paroi latérale de celui-ci, les languettes élastiques étant munies d'un prolongement longitudinal dans lequel est formé un oeillet entouré d'un rebord prévu pour être inséré dans un trou correspondant sur les parois latérales opposées du profilé, les dimensions du boîtier étant légèrement inférieures à celles de l'intérieur du profilé pour permettre le réglage de la bulle par une oscillation du boîtier autour de l'oreille avant la fixation définitive du boîtier.

De préférence, dans le même corps de niveau sont montés à la fois un niveau à bulle horizontale et un niveau à bulle verticale.

L'invention concerne également le procédé de fabrication d'un niveau à bulle selon l'invention selon lequel on assemble les deux moitiés du boîtier en renfermant le bloc à bulle, on fixe les deux moitiés préférablement par soudage à ultrasons, on monte le boîtier du bloc à bulle horizontale dans l'évidement en forme de U du profilé, respectivement le boîtier à bulle verticale dans l'extrémité creuse du profilé, derrière la fenêtre, on injecte de la colle dans les rainures à travers le trou de la paroi latérale du corps du profilé, on règle les blocs à bulle avant le durcissement de la colle, pour la bulle horizontale par basculement du boîtier sur son rebord convexe, respectivement sur le rebord concave de l'évidement du profilé, pour la bulle verticale par oscillation du boîtier autour de l'oeillet, et enfin on attend le durcissement de la colle.

D'autres caractéristiques et avantages de l'invention seront mieux compris à l'aide de la description qui suit, faite en référence aux dessins annexés dans lesquels :

La figure 1 est une vue en perspective éclatée du niveau à bulle horizontale.

La figure 2 est une vue en perspective du même niveau, monté, pendant la phase d'introduction de la colle.

La figure 3 est une vue en élévation de ce niveau pendant la phase d'ajustage de la bulle.

La figure 4 est une vue en élévation de la face externe d'une moitié du boîtier du bloc à bulle horizontale.

La figure 5 en représente la face interne.

La figure 6 est une vue en perspective éclatée du niveau à bulle verticale.

La figure 7 est une vue en perspective du même niveau, monté, pendant la phase d'introduction de la colle.

La figure 8 est une vue en élévation de ce niveau pendant la phase d'ajustage de la bulle.

La figure 9 est une vue en élévation de la face externe d'une moitié du boîtier du bloc à bulle verticale.

La figure 10 en représente la face interne.

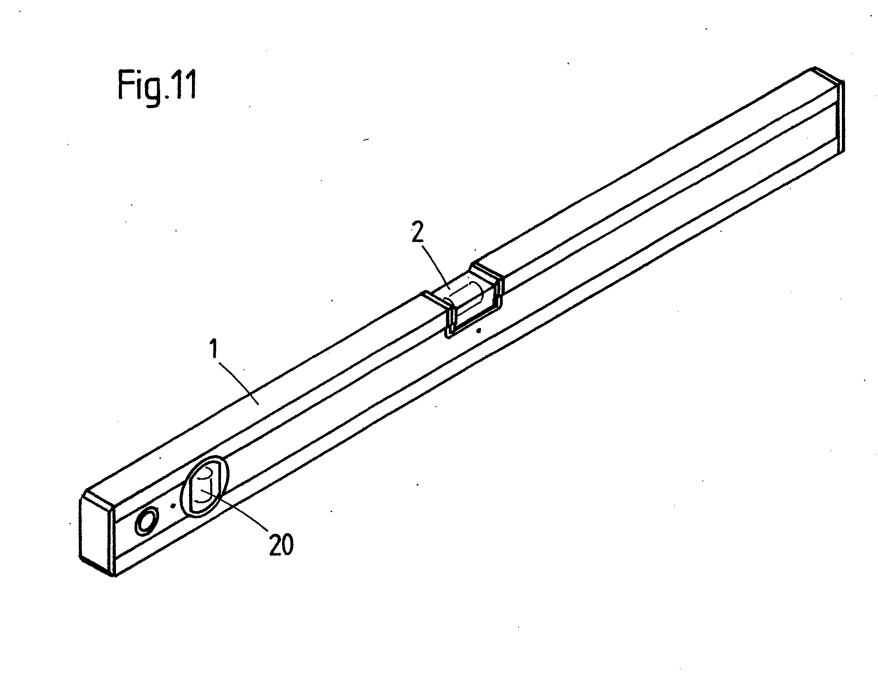

La figure 11 représente une vue générale en perspective du niveau complet.

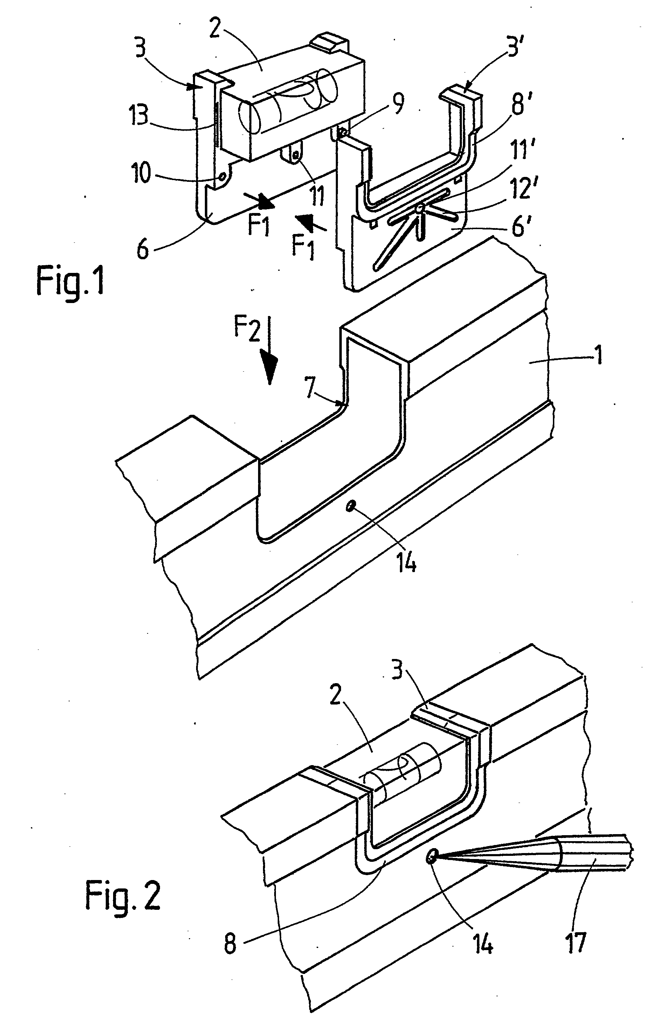

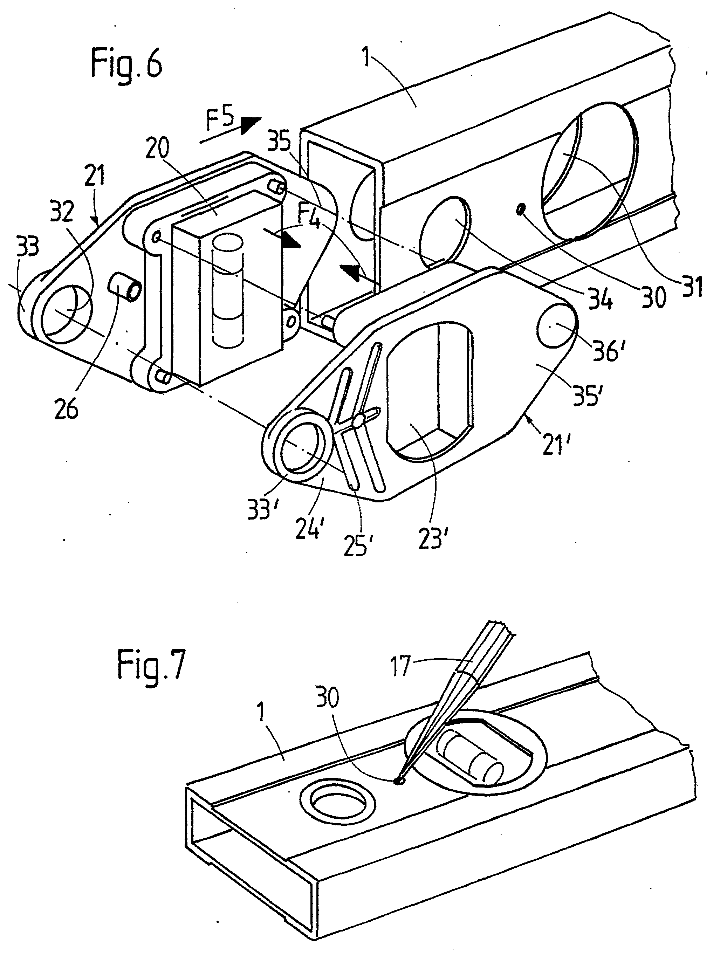

Le niveau à bulle comprend un corps 1 constitué d'un profilé creux, à section rectangulaire, dans lequel est monté un bloc à bulle horizontale (figures 1 à 5), et/ou un bloc à bulle verticale (figures 6 à 10). Le bloc à bulle horizontal 2, ou vertical 20, est fabriqué en matériau transparent, résistant aux chocs, par exemple en altuglass (nom déposé).

Dans le cas d'un niveau à bulle horizontale, le bloc à bulle 2, de forme parallélépipèdique, est prévu pour être encastré, avant son introduction dans le corps 1, dans un logement rectangulaire 5,5' d'un boîtier constitué de deux moitiés 3, 3'. Ces deux moitiés 3, 3', à profilés conjugués, sont fabriquées en matière plastique et sont de forme absolument identique, ce qui permet de les obtenir à partir du même moule. Elles ont une forme générale de U et leur côté supérieur est ouvert, délimitant une fenêtre 4, à travers laquelle sera visible le bloc à bulle 2. En dessous du logement 5, 5', chaque moitié 3, 3' du boîtier est prolongée par une languette 6, 6' lesquelles, une fois les deux moitiés du boîtier assemblées, sont opposées l'une à l'autre parallèlement entre elles. Ces deux languettes sont prévues pour s'appliquer élastiquement contre les faces internes du profilé 1, lequel est muni, dans deux parois latérales opposées, d'un évidement 7 en forme de U, correspondant à la forme du boîtier 3, 3'.

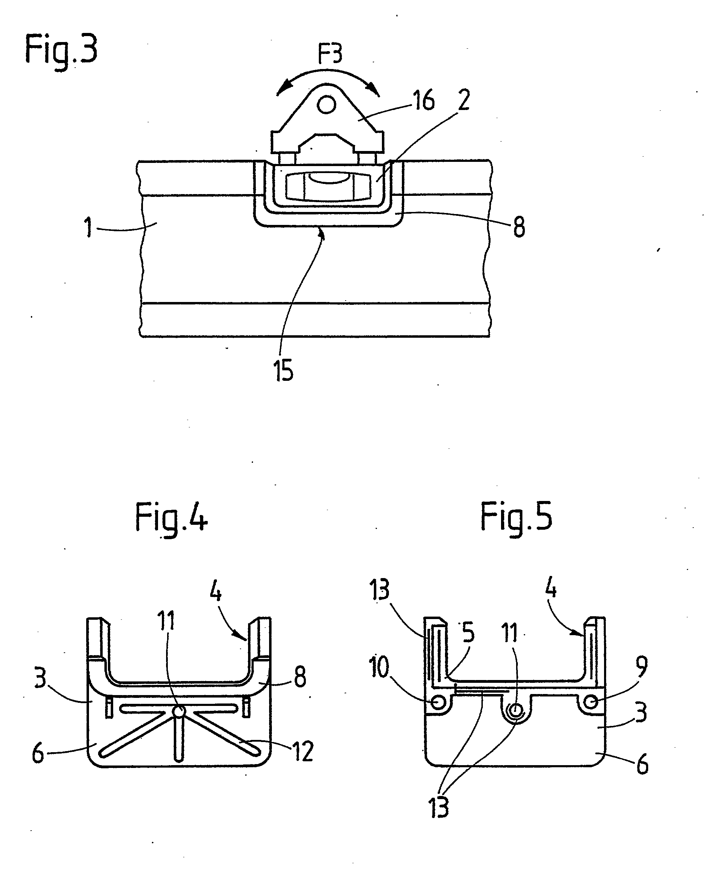

L'assemblage des deux moitiés 3, 3' du boîtier est réalisé grâce à des profils complémentaires situés sur leur face interne, en dessous du logement 5, ces profils étant notamment constitués par un pilier 9 et un trou correspondant 10. Ces profilés sont symétriques par rapport à l'axe de symétrie de la pièce, de préférence situés sur les bords de la pièce, pour permettre l'assemblage de deux moitiés absolument semblables. Au centre de chaque moitié 3, 3' du boîtier est prévu un canal 11 qui relie des rainures 12 formées sur la face externe de la languette 6 (figure 4) à des rainures semblables 12' formées sur la face externe de l'autre languette 6'. Ces rainures sont prévues pour recevoir une colle ou un adhésif approprié, comme il sera expliqué ultérieurement.

Lors de l'assemblage, les deux moitiés 3, 3' sont réunies par emboîtage de leurs profils complémentaires, en renfermant le bloc à bulle 2, comme illustré par les flèches F1 de la figure 1, puis fixées l'une à l'autre par tout moyen approprié, notamment par soudage à ultrasons. A cet effet, il est prévu sur leurs faces destinées à s'appliquer l'une contre l'autre, plusieurs petites baguettes de soudures 13 (figure 1 et 5). Ce soudage à ultrasons permet de fixer simultanément le bloc à bulle 2 dans les deux moitiés 3, 3' du boîtier et les deux moitiés entre elles pour former une unité compacte. Cette unité prémontée sera insérée comme une seule pièce dans l'évidement 7, selon la flèche F2 de la figure 1. Le boîtier est retenu dans cet évidement 7 grâce à l'élasticité des languettes 6, 6' qui, lors de l'introduction, se déforment légèrement vers l'intérieur puis reprennent leur place en s'appliquant contre les parois internes du corps 1.

La pénétration du boîtier 3, 3' dans l'évidement 7 est limitée par un rebord 8 prévu sur la face externe de chaque moitié 3, 3' et entourant l'évidement 5, et qui s'applique, quand le boîtier est monté dans le profilé 1, contre le bord de l'évidement 7, la face externe de ce rebord 8 affleurant la paroi externe du profilé 1. La face inférieure 15 de ce rebord 8, qui s'applique contre le bord de l'évidement 7, est légèrement convexe afin de permettre un basculement du boîtier dans l'évidement pour l'ajustage de la bulle, comme il sera expliqué ultérieurement. En variante, c'est le bord supérieur de l'évidement 7 qui pourrait présenter cette légère convexité.

Une fois l'ensemble boîtier-bloc à bulle inséré dans l'évidement 7, on procède au collage du boîtier dans le profilé 1, comme illustré figure 2. On injecte de la colle depuis l'extérieur, au moyen d'un outil approprié 17, à travers un trou 14 prévu dans une paroi du profilé, ce trou correspondant au canal 11 du boîtier. La colle s'introduit d'une part dans les rainures 12', lesquelles étant appliquées contre la paroi interne du profilé 1, forment avec cette paroi un canal pour le passage de la colle et, d'autre part, à travers le canal 11, dans les rainures correspondantes 12 de l'autre moitié 3, donc contre l'autre paroi interne du profilé.

Avant le durcissement de la colle, on procède ensuite à l'ajustage de la bulle, par basculement du boîtier 3, 3', selon la flèche F3 de la figure 3, dans l'évidement 7 du profilé grâce à sa face convexe 15, et au moyen d'un outil approprié 16.

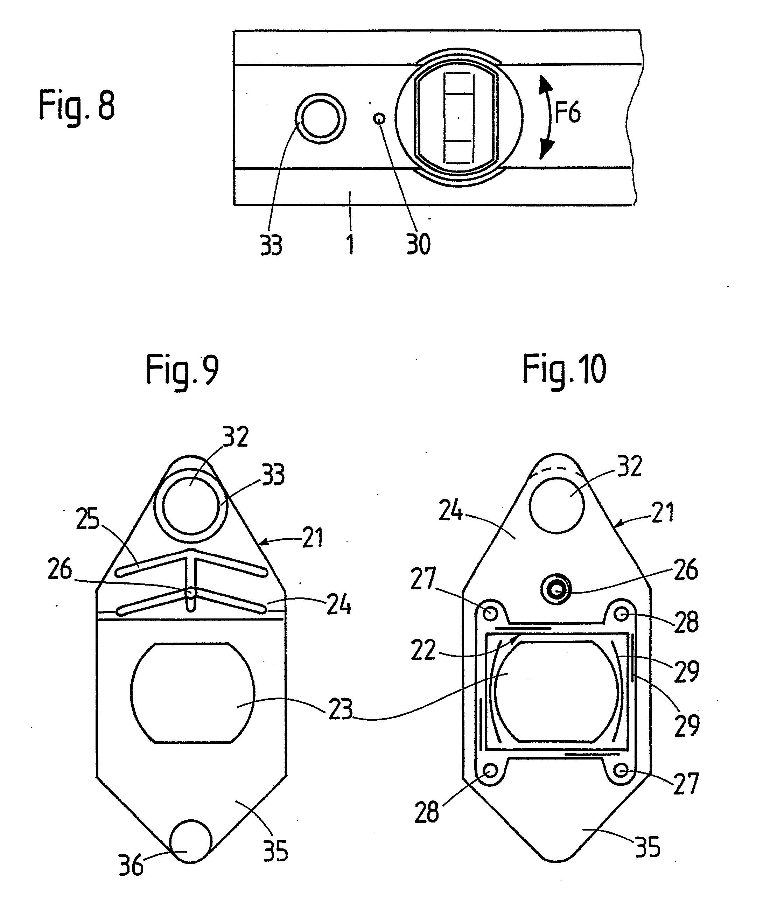

Dans le cas d'un niveau à bulle verticale, le bloc à bulle 20 est également prévu pour être encastré entre deux moitiés 21, 21', semblables d'un boîtier, lesquelles sont munies à cet effet, sur leur face interne, d'un logement rectangulaire approprié 22 (figure 10) dans lequel débouche une fenêtre 23 permettant de voir le bloc à bulle 20. Comme pour le niveau à bulle horizontale, les moitiés 21, 21' du boîtier sont munies d'un prolongement en forme de languette 24, prévu pour s'appliquer élastiquement contre les faces internes du profilé creux 1. Ces languettes 24, 24' sont également munies sur leur face externe de rainures 25, 25' reliées par un canal central 26 à un trou 30 du corps 1 pour le passage d'une colle.

Les deux moitiés sont aussi munies de profils complémentaires formés par des piliers 27 et des trous correspondants 28, disposés en diagonale, permettant leur assemblage par emboîtement, et de plusieurs baguettes de soudure 29, permettant leur fixation entre elles et avec le bloc à bulle 20 par soudage à ultrasons.

Une fois les deux moitiés 21, 21' fixées l'une à l'autre selon les flèches F4 en renfermant le bloc à bulle 20, puis soudées, l'ensemble est introduit, selon la flèche F5, dans l'extrémité du profilé 1 dont les faces latérales opposées sont munies d'une fenêtre 31 à travers laquelle sera visible le bloc à bulle 20.

Le positionnement du boîtier 21, 21' dans le profilé 1 est assuré au moyen d'un oeillet 32 entouré d'un rebord 33, formé dans la languette 24, et qui est prévu pour être introduit, grâce à l'élasticité des languettes 24, 24', dans un orifice correspondant 34 du profilé 1, le rebord affleurant la paroi externe du profilé. L'orifice 34 peut également servir de trou de suspension du niveau, le rebord 33 faisant fonction d'enjoliveur pour ce trou.

Les dimensions du boîtier sont légèrement inférieures à celles de l'intérieur du profilé pour permettre l'ajustage de la bulle par une oscillation du boîtier 21, 21' autour du pivot constitué par l'oeillet 32, selon la flèche F6 de la figure 8. Pour que les parois du boîtier s'appliquent élastiquement, en offrant une certaine résistance, contre les parois internes du profilé, chaque moitié 21, 21' du boîtier est munie, à l'opposé de la languette 24, d'un autre prolongement 35 sur la face extérieure duquel est prévu un bossage arrondi 36 qui frotte contre les parois internes du profilé.

L'ajustage de la bulle verticale est réalisé, comme pour la bulle horizontale, après l'injection de la colle dans le trou 30 (figure 7) au moyen d'un outil approprié 17, et avant le durcissement de celle-ci.

Bien entendu, on pourrait prévoir diverses modifications aux dispositifs qui viennent d'être décrits à titre d'exemple non limitatif, sans sortir du cadre de l'invention.

**Revendications**

1. Niveau à bulle comprenant un corps constitué d'un profilé creux, au moins un bloc à bulle logé dans un boîtier qui est monté dans ledit corps, ce boîtier étant muni de canaux remplis de colle et reliés à au moins une ouverture d'introduction de la colle, caractérisé par le fait que :
- le boîtier est composé de deux moitiés (3, 3'; 21, 21') assemblées par profils conjugués (9, 10; 27, 28) et fixées l'une à l'autre en renfermant ledit bloc à bulle (2; 20) ;
- chaque moitié du boîtier comporte une languette (6; 24) élastique, les deux languettes des deux moitiés étant opposées l'une à l'autre parallèlement entre elles et aux deux faces internes opposées du corps (1) du profilé creux contre lesquelles elles s'appliquent par leur élasticité;
-lesdits canaux sont des rainures (12; 25) prévues sur la face latérale extérieure de chaque moitié (3; 21) se trouvant en contact avec lesdites faces internes du profilé creux, au moins une partie de ces rainures se trouvant sur lesdites languettes (6; 24), la colle fixant ainsi les faces latérales du boîtier aux faces internes opposées du corps (1) ;
- l'ouverture d'introduction de la colle est formée par un trou (14; 30) prévu dans une paroi du profilé creux en contact avec l'une des faces latérales extérieures d'une moitié du boîtier.

2. Niveau à bulle selon la revendication 1, caractérisé par le fait que les deux moitiés (3, 3'; 21,21') sont identiques.

3. Niveau à bulle selon la revendication 1 ou 2, caractérisé par le fait que les deux moitiés assemblées comportent chacune un canal transversal (11; 26) faisant communiquer les rainures (12; 15) prévues sur la face latérale extérieure d'une moitié (3; 21) avec les rainures (12'; 25') prévues sur la face latérale extérieure de l'autre moitié (3'; 21'), ce canal transversal étant lui-même en communication avec une seule ouverture (14; 30) ménagée dans le profilé creux.

4. Niveau à bulle selon l'une des revendications 1 à 3, avec bulle horizontale, caractérisé par le fait que le boîtier (3, 3') contenant le bloc à bulle (2) est prévu pour être inséré directement depuis l'extérieur dans un évidement (7) en forme de U, formé dans deux parois latérales opposées du corps (1) du profilé, les deux moitiés du boîtier comportant un logement (5) en forme de U, entouré d'un rebord (8) qui affleure les faces extérieures des parois du corps et s'appuie contre le bord de l'évidement (7) pour limiter la pénétration du boîtier dans ledit corps, le bord inférieur (15) dudit rebord et/ou le bord supérieur de l'évidement (7), étant convexe pour le réglage du bloc à bulle par basculement du boîtier (3, 3') dans l'évidement (7), avant la fixation définitive du boîtier dans le corps (1).

5. Niveau à bulle selon l'une des revendications 1 à 4 avec bulle verticale, caractérisé par le fait que le boîtier (21, 21') contenant le bloc à bulle est prévu pour être inséré dans une extrémité du corps (1) du profilé creux, derrière au moins une fenêtre (31) d'une paroi latérale de celui-ci, les languettes élastiques (24, 24') étant munies d'un prolongement longitudinal dans lequel est formé un oeillet (32) entouré d'un rebord (33) prévu pour être inséré dans un trou correspondant (34) sur les parois latérales opposées du corps (1), les dimensions du boîtier étant légèrement inférieures à celles de l'intérieur du corps (1) pour permettre le réglage de la bulle par une oscillation du boîtier autour de l'oeillet avant la fixation définitive du boîtier dans le corps (1).

6. Niveau à bulle selon la revendication 5, caractérisé par le fait que les deux moitiés du boîtier (21, 21') sont munies, du côté opposé aux languettes élastiques (24), d'un prolongement (35) sur lequel est formé un bossage (36) prévu pour s'appliquer élastiquement contre les parois internes du corps (1) du profilé creux.

7. Niveau à bulle selon la revendication 1, caractérisé par le fait que les deux moitiés (3, 3'; 21, 21') sont fixées entre elles autour du bloc à bulle (2; 20) par soudage à ultrasons.

8. Procédé de fabrication d'un niveau à bulle selon les revendications 1, 4 et 5 caractérisé en ce que, partant d'un profilé creux d'un bloc à bulle et d'un boîtier formé de deux moitiés à profilés conjugués :

a) on assemble les deux moitiés du boîtier en renfermant le bloc à bulle.

b) on fixe les deux moitiés, préférablement, par soudage à ultrasons,

c) on monte le boîtier du bloc à bulle horizontale dans l'évidement en forme de U du profilé, respectivement le boîtier du bloc à bulle verticale dans l'extrémité creuse du profilé, derrière la fenêtre.

d) on injecte de la colle dans les rainures à travers le trou de la paroi latérale du corps du profilé creus.

e) on règle les blocs à bulle avant le durcissement de la colle, pour le bloc à bulle horizontale par basculement du boîtier sur son rebord convexe, respectivement sur celui du bord de l'évidement du profilé, pour le bloc à bulle verticale par oscillation du boîtier autour de l'oeillet,

f) on attend le durcissement de la colle.

**Patentansprüche**

1. Wasserwaage mit einem aus einem Hohlprofil bestehenden Körper und mit wenigstens einem Libellenblock, der in einem im erwähnten Körper montierten Gehäuse untergebracht ist, welches mit Klebstoff gefüllte und mit wenigstens einer Einlassöffnung für den Klebstoff verbundene Kanäle aufweist, dadurch gekennzeichnet, dass
– das Gehäuse aus zwei Hälften (3, 3'; 21, 21') besteht, welche mittels einander angepasster Profile (9, 10; 27, 28) zusammengesetzt und unter Einschliessung des erwähnten Libellenblocks (2; 20) miteinander befestigt sind;
– jede Hälfte des Gehäuses eine elastische Zunge (6; 24) aufweist und die beiden Zungen der beiden Hälften, einander gegenüberliegend, parallel zueinander und zu den gegenüberliegenden Innenseiten des Körpers (1) des Hohlprofils angeordnet sind, an denen sie infolge ihrer Elastizität anliegen;
– die erwähnten Kanäle Nuten (12; 25) sind, die auf der äusseren, in Berührung mit den erwähnten Innenseiten des Hohlprofils stehenden Seitenfläche jeder Hälfte (3; 21) vorgesehen sind, wobei wenigstens ein Teil dieser Nuten auf den erwähnten Zungen (6; 24) angeordnet ist und der Klebstoff auf diese Weise die Seitenflächen des Gehäuses mit den gegenüberliegenden Innenseiten des Körpers (1) verklebt;
– die Einlassöffnung für den Klebstoff von einem Loch (14; 30) gebildet ist, das in einer Wand des Hohlprofils, die sich in Berührung mit einer der äusseren Seitenflächen einer Hälfte des Gehäuses befindet, vorgesehen ist.

2. Wasserwaage nach Anspruch 1, dadurch gekennzeichnet, dass die beiden Hälften (3, 3'; 21, 21') gleich sind.

3. Wasserwaage nach Anspruch 1 oder 2, dadurch gekennzeichnet, dass die beiden zusammengesetzten Hälften jede einen querverlaufenden Kanal (11; 26) haben, welcher die auf der äusseren Seitenfläche einer Hälfte (3; 21) angeordneten Nuten (12; 15) mit den auf der äusseren Seitenfläche der anderen Hälfte (3'; 21') angeordneten Nuten (12', 25') verbindet und welcher selber mit einer einzigen Öffnung (14; 30) in Verbindung steht, die im Hohlprofil angebracht ist.

4. Wasserwaage nach einem der Ansprüche 1 bis 3, mit einer horizontalen Libelle, dadurch gekennzeichnet, dass das Gehäuse (3, 3'), welches den Libellenblock (2) enthält, dazu eingerichtet ist, direkt von aussen in eine U-förmige Ausnehmung (7) eingesetzt zu werden, welche in den beiden gegenüberliegenden Seitenwänden des Körpers (1) des Profils angebracht ist, dass die beiden Hälften des Gehäuses eine U-förmige Aufnahmeöffnung (5) haben, die von einem nach aussen vorstehenden Rand (8) umgeben ist, welcher mit den äusseren Seitenwänden des Körpers fluchtet und sich gegen den Rand der Ausnehmung (7) abstützt, um die Eindringtiefe des Gehäuses in den erwähnten Körper zu begrenzen, und dass die Unterkante (15) des erwähnten, nach aussen vorstehenden Randes und/oder die Oberkante der Ausnehmung (7) konvex ist, um vor der endgültigen Befestigung des Gehäuses im Körper (1) den Libellenblock durch Kippen des Gehäuses (3, 3') zu justieren.

5. Wasserwaage nach einem der Ansprüche 1 bis 4, mit einer vertikalen Libelle, dadurch gekennzeichnet, dass das Gehäuse (21, 21'), das den Libellenblock enthält, dazu eingerichtet ist, um in ein Ende des Körpers (1) des Hohlprofils hinter wenigstens ein Fenster (31) einer Seitenwand desselben eingesetzt zu werden, dass die elastischen Zungen (24, 24') mit einer sich in Längsrichtung erstreckenden Verlängerung versehen sind, in der ein von einem Rand (33) umgebendes Auge (32) angebracht ist, wobei dieser Rand dazu bestimmt ist, in ein entsprechendes Loch (34) in den gegenüberliegenden Seitenwänden des Körpers (1) eingesetzt zu werden, und dass die Abmessungen des Gehäuses etwas kleiner als die des Innern des Körpers (1) sind, um vor der endgültigen Befestigung des Gehäuses im Körper (1) die Justierung der Libelle durch Hin- und Herschwingen des Gehäuses um das Auge zu ermöglichen.

6. Wasserwaage nach Anspruch 5, dadurch gekennzeichnet, dass die beiden Hälften des Gebäudes (21, 21') an der den elastischen Zungen (24) gegenüberliegenden Seite mit einer Verlängerung (35) versehen sind, an welcher ein Buckel (36) vorgesehen ist, der elastisch an den Innenwänden des Körpers (1) des Hohlprofils anliegt.

7. Wasserwaage nach Anspruch 1, dadurch gekennzeichnet, dass die beiden Hälften (3, 3'; 21, 21') miteinander um den Libellenblock (2; 20) mittels Ultraschallschweissung befestigt sind.

8. Verfahren zur Herstellung einer Wasserwaage nach den Ansprüchen 1, 4 und 5, dadurch gekennzeichnet, dass, ausgehend von einem Hohlprofil, einem Libellenblock und einem aus zwei Hälften mit einander angepassten Profilen gebildeten Gehäuse,

a) die beiden Gehäusehälften unter Einschliessung des Libellenblocks zusammengesetzt werden,

b) die beiden Hälften miteinander befestigt werden, vorzugsweise durch Ultraschallschweissung,

c) das Gehäuse des horizontalen Libellenblocks in die U-förmige Ausnehmung des Profils bzw. das Gehäuse des vertikalen Libellenblocks in das hohle Ende des Profils hinter das Fenster eingesetzt wird,

d) durch das Loch der Seitenwand des Hohlprofilkörpers Klebstoff in die Nuten eingespritzt wird,

e) vor dem Aushärten des Klebstoffs die Libellenblöcke justiert werden, indem im Falle des horizontalen Libellenblocks das Gehäuse auf seinem konvexen Rand bzw. auf dem konvexen Rand der Ausnehmung des Profils gekippt wird und im Falle des vertikalen Libellenblocks das Gehäuse um das Auge hin- und hergeschwenkt wird,

f) die Aushärtung des Klebstoffs abgewartet wird.

## Claims

1. A spirit level comprising a body consisting of a hollow section, and at least one bubble block accommodated in a housing which is mounted in the said body, this housing being provided with conduits filled with adhesive and communicating with at least one inlet orifice for the adhesive, characterized in that,

– the housing is composed of two halves (3, 3'; 21, 21') joined together by means of matching profiles (9, 10; 27, 28) and fastened to one another, at the same time enclosing the said bubble block (2; 20);

– each half of the housing has an elastic tongue (6; 24), the two tongues of the two halves being opposite one another and parallel to one another and to the two opposing inner faces of the body (1) of the hollow section, against which they are laid as a result of their elasticity;

– the said conduits are grooves (12; 25) provided in the outer lateral face of each half (3; 21) which is in contact with the said inner faces of the hollow section, at least part of these grooves being located on the said tongues (6; 24), the adhesive thus fastening the lateral faces of the housing to the opposing inner faces of the body (1);

– the inlet orifice for the adhesive is formed by a hole (14; 30) provided in a wall of the hollow section in contact with one of the outer lateral faces of one half of the housing.

2. Spirit level according to claim 1, characterized in that the two halves (3, 3'; 21, 21') are identical.

3. Spirit level according to claim 1 or 2, characterized in that the two halves joined together each have a transverse conduit (11; 26) putting the grooves (12; 15) made in the outer lateral face of one half (3; 21) in communication with the grooves (12'; 25') made in the outer lateral face of the other half (3'; 21'), this transverse conduit itself being in communication with a single orifice (14; 30) made in the hollow section.

4. Spirit level according to one of claims 1 to 3, with a horizontal bubble, characterized in that the housing (3, 3') containing the bubble block (2) is intended to be inserted directly from outside into a U-shaped recess (7) formed in two opposing side walls of the body (1) of the section, the two halves of the housing having a U-shaped receptacle (5) surrounded by a rim (8) which is flush with the outer faces of the walls of the body and which bears against the edge of the recess (7) in order to limit the penetration of the housing in the said body, the lower edge (15) of the said rim and/or the upper edge of the recess (7) being convex for the purpose of adjusting the bubble block by tilting the housing (3, 3') in the recess (7) before the final fastening of the housing in the body (1).

5. Spirit level according to one of claims 1 to 4, with a vertical bubble, characterized in that the housing (21, 21') containing the bubble block is intended to be inserted into one end of the body (1) of the hollow section behind at least one aperture (31) in a side wall of the latter, the elastic tongues (24, 24') being equipped with a longitudinal extension, in which is formed an eye (32) surrounded by a rim (33) intended to be inserted into a corresponding hole (34) in the opposing side walls of the body (1), the dimensions of the housing being slightly less than those of the interior of the body (1), to make it possible to adjust the bubble by rocking the housing about the eye before the final fastening of the housing in the body (1).

6. Spirit level according to claim 5, characterized in that the two halves of the housing (21, 21') are equipped, on the opposite side to the elastic tongues (24), with an extension (35), on which is formed a boss (36) intended for coming elastically up against the inner walls of the body (1) of the hollow section.

7. Spirit level according to claim 1, characterized in that the two halves (3, 3'; 21, 21') are fastened to one another round the bubble block (2; 20) by menas of ultrasonic welding.

8. Process for producing a spirit level according to claims 1, 4 and 5, characterized in that, starting from a hollow section, a bubble block and a housing formed from two halves with matching sections:

a) the two halves of the housing are joined together so as to enclose the bubble block,

b) the two halves are fastened, preferably by means of ultrasonic welding,

c) the housing of the horizontal bubble block is mounted in the U-shaped recess of the section and the housing of the vertical bubble block is mounted in the hollow end of the section behind the aperture respectively,

d) adhesive is injected into the grooves through the hole in the side wall of the body of the hollow section,

e) the bubble blocks are adjusted before the adhesive sets, by tilting the housing on its convex rim or on that of the edge of the recess of the section, where the horizontal bubble block is concerned, and by rocking the housing about the eye, where the vertical bubble block is concerned,

f) the adhesive is allowed to set.

**Fig.1**

**Fig.2**

Fig.3

Fig.4

Fig.5

Fig.6

Fig.7

EP 0 238 897 B1

Fig. 8

F6

33   1   30

Fig. 9

32
33
25
26
21
24
23
35
36

Fig. 10

32
24
21
27
26
28
22
29
29
27
28
35

Fig.11

2

1

20

EP 0 238 897 B1